# EUROPÄISCHE PATENTSCHRIFT

(11) **EP 1 684 968 B1**
(45) Veröffentlichungstag und Bekanntmachung des Hinweises auf die Patenterteilung: **18.11.2009**
(21) Anmeldenummer: 04791051.8
(22) Anmeldetag: 29.10.2004
(51) Int. Cl.: B29C 67/00, B29C 47/00, B29C 44/56

(54) **VERFAHREN ZUR HERSTELLUNG EINER THERMOPLASTISCHEN KUNSTSTOFFPLATTE MIT WENIGSTENS EINER GEGLÄTTETEN SEITENKANTE UND VORRICHTUNG DAFÜR**
METHOD FOR THE PRODUCTION OF A THERMOPLASTIC PLATE COMPRISING AT LEAST ONE SMOOTH EDGE, DEVICE THEREFOR
PROCEDE POUR PRODUIRE UNE PLAQUE THERMOPLASTIQUE AYANT AU MOINS UNE ARETE LATERALE LISSEE, DISPOSITIF CORRESPONDANT

(30) Priorität: 04.11.2003 DE 10352112; 04.06.2004 DE 102004027561
(43) Veröffentlichungstag der Anmeldung: 02.08.2006
(73) Patentinhaber: Veka AG, 48324 Sendenhorst (DE)
(72) Erfinder: HARTMANN, Markus, 48324 Sendenhorst (DE); JAROSCH, Helmut, 48324 Sendenhorst (DE)
(74) Vertreter: Tarvenkorn, Oliver
(86) Internationale Anmeldenummer: PCT/EP2004/012293
(87) Internationale Veröffentlichungsnummer: WO 2005/044543

(56) Entgegenhaltungen:
- EP-A- 0 303 576
- DE-A1- 2 316 484
- DE-A1- 3 730 312
- GB-A- 1 546 657
- US-A- 4 384 908
- US-A- 4 797 173

## Beschreibung

Die Erfindung betrifft ein Verfahren zur Herstellung einer thermoplastischen Integralschaum-Kunststoffplatte mit wenigstens einer geglätteten Seitenkante mit den Merkmalen des Oberbergriffs des Anspruchs 1.

Integralschaumplatten aus einem Kern aus geschäumtem Kunststoff und dichten, glatten Oberflächen sind bekannt. Die Oberflächen können porenfrei und mit hohem Glanz durch Extrusion von Hart-PVC hergestellt werden und sind für vielfältige Anwendungszwecke einsetzbar. Der Vorteil liegt insbesondere in der geringen Dichte der Platte, die durch den grobporigen Kern herabgesetzt ist.

Allerdings variiert die Plattenbreite bei der Extrusion, so dass die Ränder für bestimmte Anwendungsfälle, bei denen es auf plane Kantenflächen und exakte Kantenradien ankommt, längsseits besäumt werden müssen, um die gewünschte Plattenbreite zu erhalten. Die so erhaltene Seitenkante ist zwar präzise und gerade herstellbar, jedoch ist der Schichtaufbau, insbesondere der grobporige Kern, sichtbar, was im Vergleich zu den glänzenden dichten Oberflächen der Platte störend wirkt. Daneben können sich in den groben Poren der Schnittkanten Schmutz und Bakterien ablagern, was gerade in bevorzugten Anwendungsfeldern von Integralschaumplatten wie Sanitärbereichen, Medizintechnik und Rettungsfahrzeuge nachteilig ist.

Auch bei massiven Kunststoffplatten sind die Seitenkanten nach dem Besäumen nicht immer gratfrei und glatt.

Die Plattenzuschnitte müssen daher oftmals so eingebaut werden, dass die Schnittkanten nicht sichtbar sind, beispielsweise dadurch, dass sie mit ihren Kanten in Profile eingefasst sind.

Aus der EP 0 303 576 A1 sind ein Verfahren und eine Vorrichtung zur Ausformung einer geschlossenen Kante an eine Hohlkammerplatte aus Kunststoff offenbart. Die abgelängte Hohlkammerplatte besitzt frei nach außen ragende Profilsteg, die in der Vorrichtung erweicht und dann aufeinander zu gebogen und schließlich verbunden werden, bis eine geschlossene Seitenkante gebildet ist. Eine Übertragung auf eine Integralschaumplatte mit grobporigem Kern ist nicht möglich.

Es stellt sich daher die Aufgabe, ein Verfahren zur Extrusion einer thermoplastischen Integralschaum-Kunststoffplatte der eingangs genannten Art so zu verbessern, dass die Platten an wenigstens einer Seitenkante verdichtet und/oder geglättet sind.

Diese Aufgabe wird durch ein Verfahren mit den Merkmalen des Anspruchs 1 gelöst.

Der besondere Vorteil der Erfindung einer präzisen und homogenen Seitenkante wird durch die gleichzeitige Kühlung der randseitigen Oberflächenbereiche der Kunststoffplatte während der Aufschmelzung der Stirnfläche erreicht.

Die Aufschmelzung bewirkt zusammen mit einem geringen Anpressdruck der Glättungsvorrichtung eine exakte Formgebung der Seitenkante, die durch die Kontur der GlättungsVorrichtung bestimmt wird. Vorhandene Unebenheiten wie Riefen werden beseitigt.

Die Integration der erfindungsgemäßen Verfahrensschritte in das übliche Extrusionsverfahren führt zu einem Entlangziehen der angeschmolzenen Seitenkante an der Stirnseite der Glättungsvorrichtung mit der Vorschubbewegung und somit zu einer sehr glatten Seitenkante.

Durch die Kühlung bleibt die Formstabilität im Randbereich der Platte trotz Anschmelzung der Seitenkante erhalten. Verwerfungen, Verbiegungen oder sonstige Beschädigungen der ebenen großen Plattenoberflächen werden dadurch vermieden.

Weiterhin betrifft die Erfindung eine zur Durchführung geeignete Glättungsvorrichtung für eine Seitenkante einer thermoplastischen Kunststoffplatte mit den Merkmalen des Anspruchs 4.

Als Führungsnut ist hier eine Konfiguration definiert, die an die zu glättende Seitenkante andrückbar ist und in der zugleich die randseitigen Oberflächenbereiche der Platte geführt sind. Diese Führungsnut ist in einen metallischen Körper eingeformt.

Um eine Wärmeleitung innerhalb der Glättungsvorrichtung so weit wie möglich zu verhindern, ist jeweils zwischen den Heiz- und den Kühlmitteln bzw. jeweils zwischen der Stirnfläche und einer Seitenfläche wenigstens eine thermische Isolationsschicht vorgesehen.

Zwischen einem Querschnittsbereich, in dem ein Heizmittel angeordnet ist, und einem Querschnittsbereich, in dem ein Kühlmittel angeordnet ist, ist jeweils wenigstens ein Isolierbereich vorgesehen, der durch eine Führungsnut oder eine Bohrung gebildet ist, die sich über einen überwiegenden Teil der Länge der Glättungsvorrichtung erstreckt.

Die in der Führungsnut oder Bohrung liegende Luftschicht blockiert eine Wärmeübertragung weitgehend, so dass die Wärmeverluste im Heizbereich im wesentlichen durch die stark reduzierten Wärmeströme definiert sind, die über die Verbindungsstege zwischen Heiz- und Kühlbereichen fließen. Für die Heizbereiche wird damit weniger Heizenergie und für die Kühlbereiche weniger Energie zur Temperierung der Kühlmittel benötigt. Außerdem wird an der behandelten Seitenkante einer Kunststoffplatte ein größerer Temperaturgradient geschaffen, so dass die Formstabilität der gekühlten randseitigen Oberflächenbereiche erhöht und zugleich durch vergrößerten Wärmeeintrag in die Seitenkante die Aufschmelzung beschleunigt wird. Durch die verbesserte Kühlung der Nachbarbereiche erstarrt der aufgeschmolzene Kunststoff an der Seitenkante auch wieder schneller, so dass Formänderungen nach Durchlaufen der Glättungsvorrichtung vermieden werden.

Als Heizmittel kann ein Heizkanal vorgesehen sein, der von einer beheizten Flüssigkeit, beispielsweise Öl, durchflossen ist. Die Flüssigkeit kann außerhalb der Vorrichtung exakt temperiert werden, so dass der Wärmeeintrag in den Heizbereich definierbar ist.

Alternativ ist ist das Heizmittel durch wenigstens eine elektrische Heizpatrone gebildet. Hierdurch ergibt sich gegenüber einer Beheizung mit temperierten Flüssigkeiten der Vorteil einer besseren und schneller reagierenden Temperaturregelung. Da die Heizpatrone durch Bohrungen in die Glättungsvorrichtung integriert ist, treten keine direkten Wärmeverluste des Heizmittels an die Umgebung auf.

Es hat sich als besonders günstig erwiesen, wenn sich das Heizmittel über das 0,4 bis 0,6fache der Länge der Glättungsvorrichtung erstreckt. Bei einer Beheizung nur etwa über die Hälfte der Länge der Glättungsvorrichtung bleibt ein etwa ebenso langer Bereich in der Glättungsvorrichtung bestehen, der zwar gekühlt, aber nicht mehr beheizt ist und so eine Abkühlung des thermoplastischen Werkstoffs bis unter die Erweichungstemperatur ermöglicht, während die Seitenkante noch in der Führungsnut der Glättungsvorrichtung läuft und darüber kalibriert wird.

Als Kühlmittel sind insbesondere Kühlkanäle vorgesehen, die von einer Kühlflüssigkeit, insbesondere Wasser, durchflossen sind.

Vorzugsweise werden die Kühlkanäle von einer gemeinsamen Kühlflüssigkeits-Vorlaufleitung gespeist, so dass sich ein gleiches Temperaturniveau an der randseitigen Bereiche an der Ober- und der Unterseite der Kunststoffplatte einstellen kann. Hierzu sollte der Querschnitt der Glättungsvorrichtung, jedenfalls hinsichtlich der Querschnittsbereiche für die Kühlung, möglichst spiegelsymmetrisch ausgebildet sein.

Die Erfindung wird nachfolgend mit Bezug auf die Zeichnung näher erläutert. Die Figuren zeigen im Einzelnen:
- Fig. 1: einen Teil einer Vorrichtung zur Herstellung einer Kunststoffplatte in schematischer perspektivischer Ansicht;
- Fig. 2: eine erste Ausführungsform einer Glättungsvorrichtung, ebenfalls in perspektivischer Ansicht;
- Fig. 3: eine zweite Ausführungsform der Glättungsvorrichtung in Ansicht von vorn;
- Fig. 4: die Glättungsvorrichtung aus Figur 3 in Ansicht von oben und
- Fig. 5, 6: zwei Ausführungsformen eines Kantenbearbeitungssystems, jeweils in schematischer Ansicht von oben.

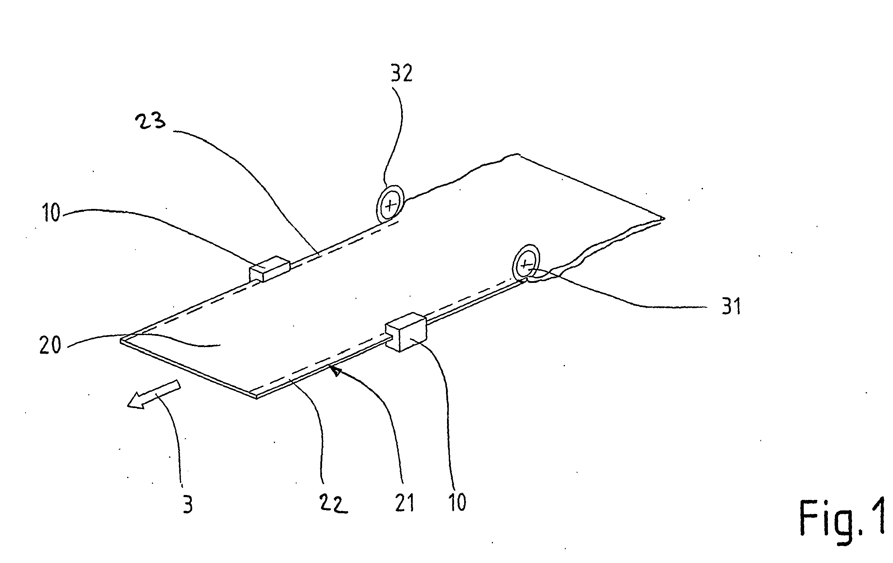

Fig. 1 zeigt eine Kunststoffplatte 20 aus einem thermoplastischem Kunststoff, beispielsweise eine Integralschaumbahn, die mittels einer an sich bekannten, nicht dargestellten Extrusionsvorrichtung endlos hergestellt wird.

Die Seitenkanten 21 der Kunststoffplatte 20 werden in der dargestellten Ausführungsform durch geeignete Schneidvorrichtungen , 32 geradlinig abgeschnitten. An die Seitenkante 21 werden beidseitig in Abzugsrichtung 3 gesehen Glättungsvorrichtungen 10 angedrückt, die die an der Seitenkante gelegenen Oberflächenbereiche partiell anschmelzen, wodurch die Seitenkanten 21 homogenisiert und geglättet werden.

Soweit ein Beschneiden der Seitenkante entfallen kann, wird die unbehandelte Kante der erfindungsgemäßen Glättungsvorrichtung zugeführt.

Die Randbereiche 22, 23 bei den Seitenkanten 21 werden bei der Führung durch die Glättungsvorrichtungen 10 gekühlt, so dass sie formstabil bleiben. Die insbesondere hochglänzend ausgebildeten Oberflächen der Kunststoffplatte 20 behalten dadurch ihre Form und Oberflächenstruktur in den Randbereichen 22, 23.

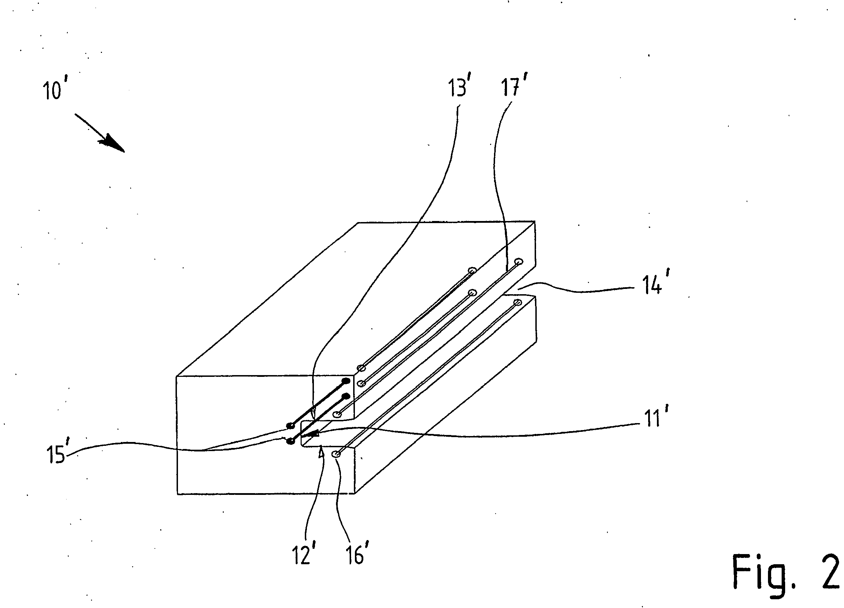

Fig. 2 zeigt eine erfindungsgemäße Glättungsvorrichtung 10', die aus einem metallischen oder sonst wie wärmeleitfähigem Körper gebildet ist, der eine Führungsnut 14' aufweist. Die Führungsnut 14' ist durch Seitenflächen 12', 13' und eine Stirnfläche 11' begrenzt, wobei die Seitenflächen 12', 13' überwiegend planparallel zueinander ausgerichtet sind, jedoch in einem Bereich zur Außenseite der Glättungsvorrichtung 10' hin vorzugsweise in einem kleinen Winkel zu Mittelachse der Führungsnut nach außen geneigt sind, so dass sich eine Einlaufschräge ergibt. Durch diesen Übergang wird vermieden, dass die Oberfläche der Kunststoffplatte 20 am Außenumfang der Glättungsvorrichtung durch Kratzspuren oder dergleichen beschädigt wird. Mit Einlaufschräge ist hier ein sich aufweitender Bereich bezeichnet, der durch eine ebene Fläche aber auch durch eine gekrümmte Fläche gebildet sein kann. Letztere hat den Vorteil, dass ein kontinuierlicher Übergang in die Führungsnut, also ohne Kante, gegeben ist.

Die Stirnfläche 11' ist durch erhitztes Öl, das durch Heizkanäle 15' fließt, auf eine Temperatur von 130°C bis 250°C, insbesondere auf ca. 185°C, erwärmt, so dass ein thermoplastischer Kunststoff wie beispielsweise Hart-PVC lokal aufgeschmolzen wird.

Die Länge der Glättungsvorrichtung ist im Verhältnis zu Abzugsgeschwindigkeit der Kunststoffplatte 20 so gewählt, dass während des Kontakts der Seitenkante 21 mit der Stirnseite 2.1 genügend Wärme zum oberflächlichen Aufschmelzen übertragen werden kann, ohne jedoch einen zu großen Wärmeintrag in die hinter der Seitenkante 21 liegenden Kernschichten der Platte zu bewirken.

Zur Vermeidung eines zu hohen Wärmeintrags in die Platte, der zu einer zu hohen Erwärmung der Randbereiche 22, 23 der Platte bis über den Erweichungspunkt hinaus und einer daraus resultierenden Verformung führen könnte, sind die Seitenflächen 12', 13' in der Führungsnut 14' durch ein Kühlmittel, insbesondere Wasser gekühlt, so dass deren Temperatur etwa der Umgebungstemperatur entspricht.

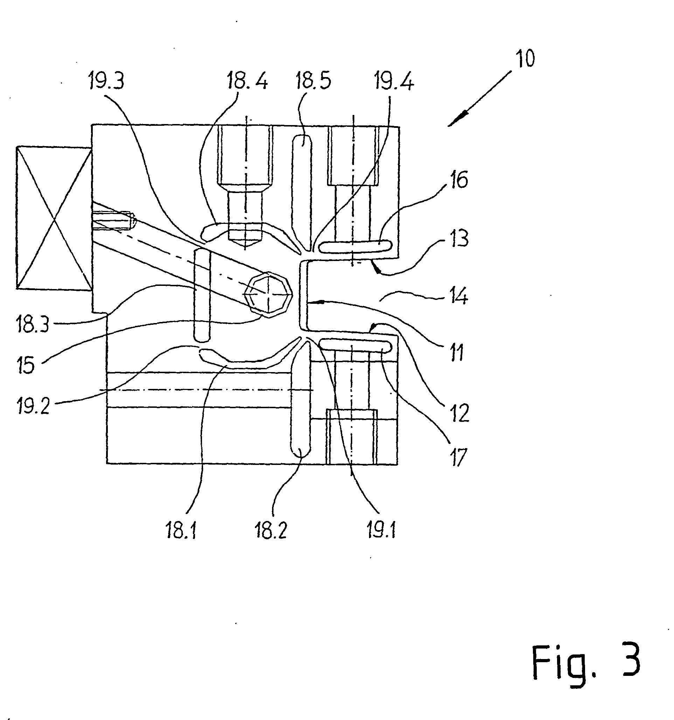

Fig. 3 zeigt eine zweite Ausführungsform einer Glättungsvorrichtung 10, die wie auch die erste Ausführungsform aus einem metallischen oder sonstwie wärmeleitfähigem Körper gebildet ist, der eine Führungsnut 14 aufweist. Die Stirnfläche 11 wird durch eine Heizpatrone erwärmt. Die Heizpatrone 15 ist von den Umgebungsbereichen durch

Ausnehmungen 18.1,...,18.5, die sich über die Länge der Glättungsvorrichtung 10 erstrecken, weitgehend gegenüber den übrigen Materialbereichen der Glättungsvorrichtung, insbesondere den Kühlkanälen 16, 17, abgeschirmt.

Die Ausnehmungen 18.1, 18.3, 18.4, die beispielsweise durch Erodieren hergestellt sein können, bilden in dem dargestellten Ausführungsbeispiel eine bogenförmige Spange, die mit ihrer offenen Seite auf die zu beheizende Stirnfläche 11 der Führungsnut 14 gerichtet ist.

Zwischen den Ausnehmungen 18.1, 18.3, 18.4 und der Führungsnut 14 bestehen nur noch schmale Stege 19.1 ... 19.4 aus Vollmaterial. Durch diese sehr dünnen Stege ist die Heizpatrone 15 und der sie umgebende Materialbereich mit dem übrigen Querschnitt der Glättungsvorrichtung verbunden. Die Wärmeleitung über die schmalen Stege 19.1 ... 19.4 ist jedoch stark eingeschränkt.

Zusätzliche Ausnehmungen 18.2, 18.5 erstrecken sich parallel zur Stirnfläche 11 und sorgen für eine weitere Abschirmung des in Figur 3 links gelegenen, beheizten Querschnittsbereichs der Glättungsvorrichtung 10 und der davon rechts gelegenen gekühlten Querschnittsbereiche ober- und -unterhalb der Führungsnut 14.

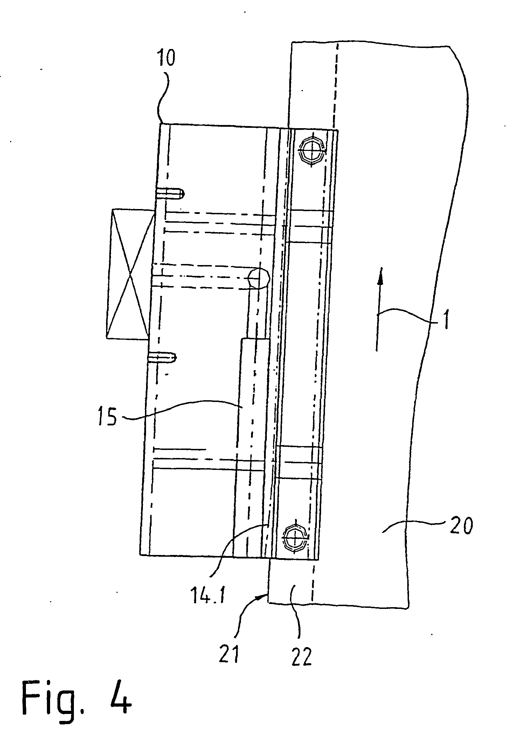

Wie insbesondere Fig. 4 in einer Ansicht mit verdeckten Linien auf die Glättungsvorrichtung 10 von oben zeigt, springen nicht nur die Stirnflächen randseitig zur Kunststofftafel hin nach außen, sondern weist auch die Führungsnut 14 an ihrem Anfang, in Bezug auf die Bewegungsrichtung 1 gesehen, eine Einlaufschräge 14.1 auf. Vorzugsweise erfolgt der Übergang von dem Einlaufbereich in den eigentlichen Bereich der Führungsnut kontinuierlich, das heißt, ohne eine Kante am Übergang und damit ohne eine plötzliche Stauchung der angeschmolzenen Seitenkante 21 der Kunststofftafel während der Nachbearbeitung.

In Fig. 4 ist weiterhin zu erkennen, dass sich die Heizpatrone 15 etwa über die halbe Länge der Glättungsvorrichtung 10 erstreckt. Der in Fig. 4 oberhalb der Heizpatrone 15 gelegene Teil der Glättungsvorrichtung ist jedoch ebenfalls ober- und unterhalb der Führungsnut 14 gekühlt, so dass dort eine Erstarrung der angeschmolzenen Materialbereich bei gleichzeitiger Führung und Kalibrierung in der Führungsnut 14 erfolgt, bevor der angeschmolzene Bereich der Seitenkante die Glättungsvorrichtung 10 verlassen hat.

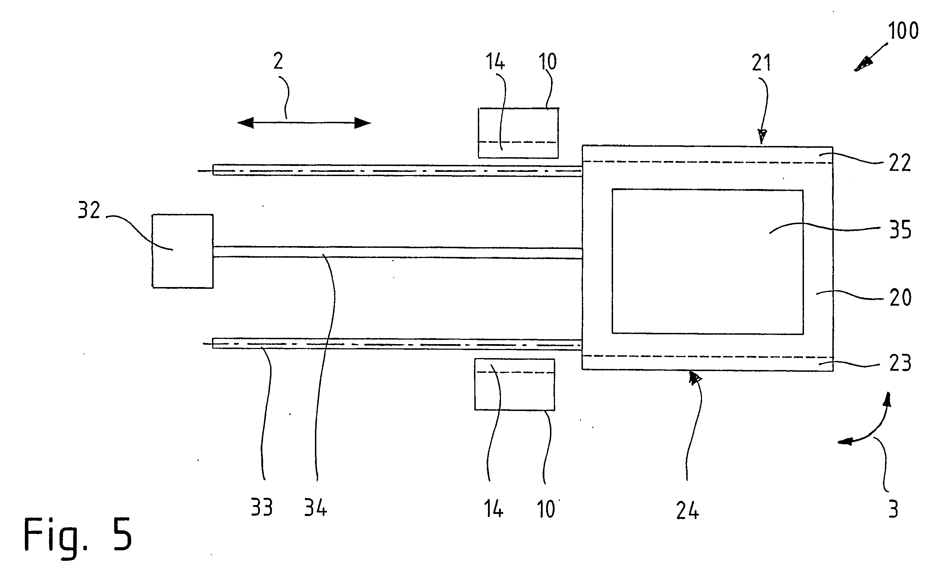

Fig. 5 zeigt ein Kantenbearbeitungssystem 100, das eine Antriebsvorrichtung, bestehend aus Motor 32, Führung 33 und Antriebsspindel 34, sowie einen Schlitten mit Arretierungsmitteln 35 für eine Kunststoffplatte 20 umfasst. Die auf dem Schlitten arretierte Kunststoffplatte 20 kann in einer Bewegungsrichtung 2 verfahren werden, wobei die Seitenkante 21 und der randseitige Oberflächenbereich 22 durch die Glättungsvorrichtung 10 gezogen und dort nachbehandelt werden.

Zwei spiegelsymmetrisch zur Bewegungsrichtung 2 angeordnete Glättungsvorrichtungen 10 ermöglichen eine gleichzeitige Behandlung gegenüberliegender Seitenkanten 21, 24 in den Führungsnuten 14.

Zusätzlich kann eine Dreheinrichtung vorgesehen sein, mit der die Kunststoffplatte 20 gegenüber dem Schlitten in der mit 3 bezeichneten Drehrichtung rotierbar ist. Dadurch können nach einer 90°-Drehung auch die weiteren Seitenkanten der Kunststoffplatte 20 nachbehandelt werden.

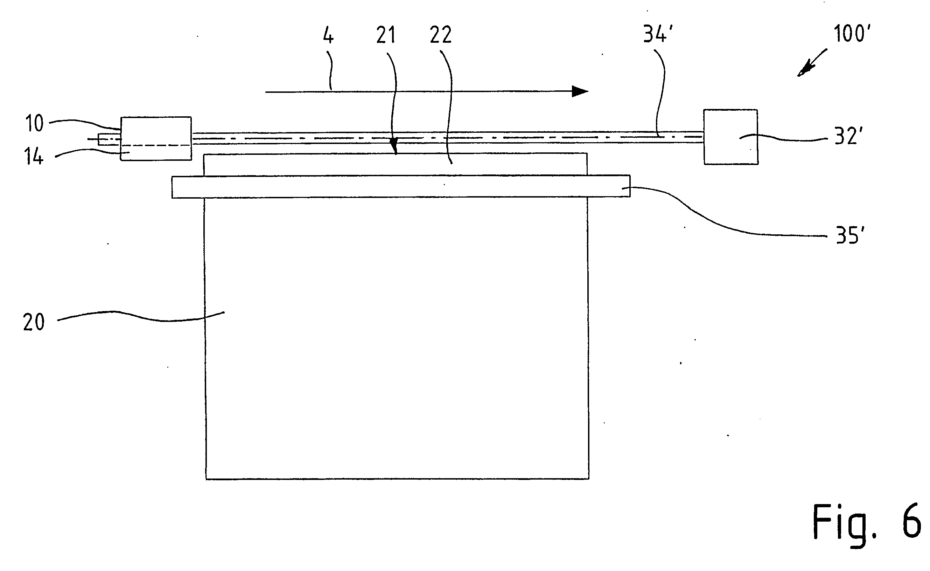

Fig. 6 zeigt eine weitere Ausführungsform eines Kantenbearbeitungssystems 100', bei der die Kunststoffplatte 20 ortsfest mittels einer Arretierungseinrichtung 35' festlegbar ist. Die Glättungsvorrichtung 10 ist an einer Spindel 34', welche durch einen Motor 32` angetrieben ist, beweglich geführt und wird mit ihrer Führungsnut 14 entlang der Seitenkante 21 bzw. dem randseitigen Bereich 22 der Kunststoffplatte 20 geführt.

## Patentansprüche

1. Verfahren zur Herstellung einer thermoplastischen Integralschaum-Kunststoffplatte mit wenigstens einer geglätteten Seitenkante durch:
- Aufmischen eines thermoplastischen Kunststoffs in einem Extruder,
- Auspressen des Kunststoffs durch eine Breitschlitzdüse zu einer ebenen Kunststoffbahn (20),
- Abkühlen und Kalibrieren der Kunststoffbahn (20) auf einem Kalanderwalzenpaar,
- Abziehen der Kunststoffbahn (20),
**dadurch gekennzeichnet, dass** die Seitenkante (21) der Kunststoffbahn (20) nach der Kalibrierung in einer Führungsnut einer Glättungsvorrichtung (10; 10') bis wenigstens zur Schmelztemperatur erwärmt und unter leichtem Anpressdruck an der Glättungsvorrichtung entlang geführt wird und darin ein grobporiger Kern geglättet und verdichtet wird und dass zugleich die randseitigen Oberflächenbereiche (22, 23) durch Kühlung in der Glättungsvorrichtung (10; 10') auf einer Temperatur unterhalb der Erweichungstemperatur gehalten werden.

2. Verfahren nach Anspruch 1, **dadurch gekennzeichnet, dass** der Kunststoff Hart-PVC ist.

3. Verfahren nach einem der Ansprüche 1 bis 3, **dadurch gekennzeichnet, dass** die Längsseiten der Kunststoffbahn (20) vor dem Erwärmen der Seitenkanten besäumt werden.

4. Glättungsvorrichtung (10; 10') für eine Seitenkante (21, 24) einer thermoplastischem Kunststoffplatte (20), mit einer Führungsnut (14; 14') mit wenigstens einem Heizmittel (15; 15') in der Stirnfläche (11; 11') und mit jeweils wenigstens einem Kühlmittel (16. 17; 16', 17') in den sich gegenüberliegenden Seitenflächen (12, 13; 12', 13'), wobei eine in der Führungsnut (14; 14') führbare Kunststoffplatte (20) mit ihrer Schnittkante (21, 24) an dem Stirnbereich (11, 11') und mit ihren randseitigen Oberflächenbereichen (22, 23) an den Seitenflächen (12, 13; 12', 13') anliegt, und wobei jeweils zwischen den Heiz- und den Kühlmitteln (15, 16, 17) wenigstens eine thermische Isolationsschicht vorgesehen ist,
**dadurch gekennzeichnet, dass** die Führungsnut in einen metallischen Körper eingeformt ist und in einem gemeinsamen Querschnitt
- zwischen einem Querschnittsbereich, in dem ein Heizmittel (15) angeordnet ist, und wenigstens einem Querschnittsbereich, in dem ein Kühlmittel (16; 17) angeordnet ist, und
- zwischen der Stirnfläche (11) und einer Seitenfläche (12, 13)
jeweils wenigstens eine thermische Isolationsschicht vorgesehen ist, die durch eine Nut oder eine Bohrung (18.1,...,18.5) gebildet ist, die sich über die Länge der Glättungsvorrichtung (10) erstreckt.

5. Glättungsvorrichtung (10') nach Anspruch 4, **dadurch gekennzeichnet, dass** das Heizmittel durch wenigstens einen Heizkanal (15') gebildet ist, der von einer beheizten Flüssigkeit durchflossen ist.

6. Glättungsvorrichtung (10) nach Anspruch 4 oder 5, **dadurch gekennzeichnet, dass** das Heizmittel durch wenigstens eine elektrische Heizpatrone (15) gebildet ist.

7. Glättungsvorrichtung (10; 10') nach einem der Ansprüche 4 bis 6, **dadurch gekennzeichnet, dass** sich das Heizmittel (15; 15') über das 0,4 bis 0,6fache der Länge der Glättungsvorrichtung erstreckt.

8. Glättungsvorrichtung (10; 10') nach einem der Ansprüche 4 bis 7, **dadurch gekennzeichnet, dass** die Kühlmittel jeweils durch wenigstens einen Kühlkanal (16, 17: 16', 17') gebildet sind, die von einer Kühlflüssigkeit durchflossen sind.

9. Glättungsvorrichtung (10; 10') nach Anspruch 8, **dadurch gekennzeichnet, dass** die Kühlkanäle (16, 17; 16', 17') von einer gemeinsamen Kühlflüssigkeits-Vorlaufleitung gespeist werden.

10. Glättungsvorrichtung (10; 10') nach einem der Ansprüche 4 bis 9, **dadurch gekennzeichnet, dass** wenigstens eine der Seitenflächen (12, 13; 12', 13') der Nut Führungsnut (14; 14') zur Außenseite der Vorrichtung hin eine Einlaufschräge (14.1) aufweist.

11. Glättungsvorrichtung (10) nach einem der Ansprüche 4 bis 10, **dadurch gekennzeichnet, dass** die Glättungvorrichtung federnd und senkrecht zur Stirnfläche (11) verschiebbar gelagert ist.

## Claims

1. Method for the production of a thermoplastic integral foam-synthetic material plate having at least one smoothed side edge by means of:
- mixing a thermoplastic synthetic material in an extruder,
- pressing the synthetic material out through a wide slit nozzle to form a planar synthetic material strip (20).
- cooling and calibrating the synthetic material strip (20) on a calender roll pair,
- drawing off the synthetic material strip (20),
**characterised in that**, after calibration, the side edge (21) of the synthetic material strip (20) is heated in a guide groove of a smoothing device (10; 10') to at least the melting temperature and under light pressing pressure is guided along the smoothing device and therein a coarsely porous core is smoothed and compacted and that at the same time the edge surface regions (22, 23) are kept at a temperature below the softening temperature by cooling in the smoothing device (10; 10').

2. Method as claimed in claim 1., **characterised in that** the synthetic material is hard PVC.

3. Method as claimed in any one of claims 1 to 3, **characterised in that** the long sides of the synthetic material strip (20) are trimmed before the heating of the side edges.

4. Smoothing device (10;10) for a side edge (21, 24) of a thermoplastic synthetic material plate (20), having a guide groove (14; 14') having at least one heating means (15; 15') in the end surface (11; 11') and having in each case at least one cooling means (16, 17; 16', 17') in the opposing side surfaces (12, 13; 12', 13'), wherein a synthetic material plate (20) which can be guided in the guide groove (14; 14') lies with its cut edge (21, 24) on the end region (11; 11') and lies with its edge surface regions (22, 23) on the side surfaces (12, 13; 12', 13'), and wherein in each case between the heating and cooling means (15, 16, 17) at least one thermal insulation layer is provided,
**characterised in that** the guide groove is moulded into a metal body, and in a common cross-section
- between a cross-sectional region in which a heating means (15) is disposed and at least one cross-sectional region in which a cooling means (16; 17) is disposed, and
- between the end surface (11) and a side surface (12, 13)
in each case at least one thermal insulation layer is provided which is formed by a groove or a bore (18.1, ..., 18.5) which extends over the length of the smoothing device (10).

5. Smoothing device (10') as claimed in claim 4, **characterised in that** the heating means is formed by at least one heating channel (15') through which a heated liquid flows.

6. Smoothing device (10) as claimed in claim 4 or 5, **characterised in that** the heating means is formed by at least one electric heating cartridge (15).

7. Smoothing device (10; 10') as claimed in any one of claims 4 to 6, **characterised in that** the heating means (15; 15') extends over 0.4 to 0.6 times the length of the smoothing device.

8. Smoothing device (10; 10') as claimed in any one of claims 4 to 7, **characterised in that** the cooling means are formed in each case by at least one cooling channel (16, 17; 16', 1.7') through which a cooling liquid flows.

9. Smoothing device (10; 10') as claimed in claim 8, **characterised in that** the cooling channels (16. 17; 16', 17') are supplied from a common cooling liquid feed line.

10. Smoothing device (10; 10') as claimed in any one of claims 4 to 9, **characterised in that** at least one of the side surfaces (12, 13; 12', 13') of the groove guide groove *[sic]* (14; 14') has a run-in slope (14.1) facing towards the outside of the device.

11. Smoothing device (10) as claimed in any one of claims 4 to 10, **characterised in that** the smoothing device is mounted so as to be displaceable in a resilient manner and perpendicular to the end surface (11).

## Revendications

1. Procédé de fabrication d'une plaque thermoplastique intégrale à mousse structurée avec au moins une arête latérale lissée par :
- le mélange d'un plastique thermoplastique dans une extrudeuse,
- l'extrusion du plastique à travers une filière plate pour former une bande de plastique plane (20),
- le refroidissement et le calibrage de la bande de plastique (20) sur une paire de cylindres de calandre,
- retrait de la bande de plastique (20),
**caractérisé en ce que** l'arête latérale (21) de la bande de plastique (20) est chauffée après calibrage dans une rainure de guidage d'un dispositif de lissage (10 ; 10') au moins jusqu'à la température de fusion et est guidée le long du dispositif de lissage avec une légère pression d'appui et une âme à larges pores y est lissée et comprimée et **en ce qu'**en même temps les zones de surface de bord (22, 23) sont maintenues à une température inférieure à la température de ramollissement par refroidissement dans le dispositif de lissage (10 ; 10').

2. Procédé selon la revendication 1, **caractérisé en ce que** le plastique est du PVC rigide.

3. Procédé selon l'une quelconque des revendications 1 à 3, **caractérisé en ce que** les arêtes longitudinales de la bande de plastique (20) sont cisaillées avant chauffage des arêtes latérales.

4. Dispositif de lissage (10 ; 10') pour une arête latérale (21, 24) d'une plaque thermoplastique (20), avec une rainure de guidage (14 ; 14') avec au moins un moyen de chauffage (15 ; 15') dans la surface frontale (11 ; 11') et avec respectivement au moins un moyen de refroidissement (16, 17 ; 16', 17') dans les surfaces latérales opposées (12, 13 ; 12', 13'), dans lequel une plaque de plastique (20) pouvant être guidée dans la rainure de guidage (14 ; 14') s'appuie avec son arête de coupe (21, 24) contre la zone frontale (11, 11') et avec ses zones de surface de bord (22, 23) contre les surfaces latérales (12, 13 ; 12', 13') et dans lequel au moins une couche d'isolation thermique est prévue respectivement entre les moyens de chauffage et les moyens de refroidissement (15, 16, 17),
**caractérisé en ce que** la rainure de guidage est moulée dans un corps métallique et dans une section transversale commune
- entre une zone de section transversale, dans laquelle un moyen de chauffage (15) est agencé, et au moins une zone de section transversale, dans laquelle un moyen de refroidissement (16 ; 17) est agencé, et
- entre la surface frontale (11) et une surface latérale (12, 13),
respectivement au moins une couche d'isolation thermique est prévue, laquelle est formée par une rainure ou un perçage (18.1, ..., 18.5), qui s'étend sur la longueur du dispositif de lissage (10).

5. Dispositif de lissage (10') selon la revendication 4, **caractérisé en ce que** le moyen de chauffage est formé par au moins un canal de chauffage (15'), qui est traversé par un liquide chauffé.

6. Dispositif de lissage (10) selon la revendication 4 ou 5, **caractérisé en ce que** le moyen de chauffage est formé par au moins un thermoplongeur électrique (15).

7. Dispositif de lissage (10 ; 10') selon l'une quelconque des revendications 4 à 6, **caractérisé en ce que** le moyen de chauffage (15 ; 15') s'étend sur 0,4 à 0,6 fois la longueur du dispositif de lissage.

8. Dispositif de lissage (10 ; 10') selon l'une quelconque des revendications 4 à 7, **caractérisé en ce que** les moyens de refroidissement sont formés chacun par au moins un canal de refroidissement (16, 17 ; 16', 17'), qui sont traversés par un liquide de refroidissement.

9. Dispositif de lissage (10 ; 10') selon la revendication 8, **caractérisé en ce que** les canaux de refroidissement (16, 17 ; 16', 17') sont alimentés par une conduite d'alimentation de liquide de refroidissement commune .

10. Dispositif de lissage (10 ; 10') selon l'une quelconque des revendications 4 à 9, **caractérisé en ce qu'**au moins une des surfaces latérales (12, 13 ; 12', 13') de la rainure de guidage (14 ; 14') présente un chanfrein d'entrée (14.1) vers le côté extérieur du dispositif.

11. Dispositif de lissage (10) selon l'une quelconque des revendications 4 à 10, **caractérisé en ce que** le dispositif de lissage est monté à pouvoir être déplacé de manière élastique et perpendiculaire par rapport à la surface frontale (11).
